# EUROPÄISCHE PATENTSCHRIFT

(11) **EP 3 465 135 B1**
(45) Veröffentlichungstag und Bekanntmachung des Hinweises auf die Patenterteilung: **17.04.2024**
(21) Anmeldenummer: 17719485.9
(22) Anmeldetag: 26.04.2017
(51) Int. Cl.: G01M 17/08, G01M 13/00, G01L 5/00, E01B 27/16

(54) **PRÜFVORRICHTUNG UND VERFAHREN ZUM PRÜFEN EINES STOPFAGGREGATS**
TEST DEVICE AND METHOD FOR TESTING A TAMPING UNIT
DISPOSITIF DE VÉRIFICATION ET PROCÉDÉ POUR VÉRIFIER UN GROUPE DE BOURRAGE

(30) Priorität: 24.05.2016 AT 2602016
(43) Veröffentlichungstag der Anmeldung: 10.04.2019
(73) Patentinhaber: Plasser & Theurer, Export von Bahnbaumaschinen, Gesellschaft m.b.H., 1010 Wien (AT)
(72) Erfinder: PHILIPP, Thomas, 4060 Leonding (AT)
(86) Internationale Anmeldenummer: PCT/EP2017/000522
(87) Internationale Veröffentlichungsnummer: WO 2017/202484

(56) Entgegenhaltungen:
- EP-A1- 2 770 108
- DE-A1-102014 206 412
- GB-A- 2 086 063
- US-A1- 2003 121 333

## Beschreibung

### Gebiet der Technik

Die Erfindung betrifft eine Prüfvorrichtung und ein Verfahren zum Prüfen eines Stopfaggregats, das zwei gegenüberliegende, mittels Beistellzylinder zueinander bewegliche, in Schwingung versetzbare Stopfpickelarme umfasst.

### Stand der Technik

Stopfaggregate dienen zum Unterstopfen eines Gleises, welches auf einem Schotterbett gelagert ist. Dabei dringen Stopfpickel in Gleisrichtung vor und hinter einer Schwelle in das Schotterbett ein. Mittels einer zueinander gerichteten Beistellbewegung wird der Schotter unter der Schwelle verdichtet. Während des Eintauchens ins Schotterbett und während der Beistellbewegung sind die Stopfpickel mit einer Vibrationsbewegung beaufschlagt, um die Umlagerung des Schotters zu erleichtern.

Ein im Einsatz befindliches Stopfaggregat ist großen Beanspruchungen ausgesetzt, die eine regelmäßige Wartung erforderlich machen. Üblicherweise werden in vorgegebenen Wartungsintervallen verschleißanfällige Bauteile geprüft und gegebenenfalls erneuert. Dabei muss sichergestellt sein, dass das Stopfaggregat nach einer Wartung die ursprünglichen Leistungsmerkmale erreicht.

Aus der GB 2 451 310 A sind ein Verfahren und eine Prüfvorrichtung bekannt, um einen aktuellen Verschleißzustand einzelner Komponenten zu überprüfen. Dazu sind an einem Stopfaggregat mehrere Sensoren angeordnet, deren Messsignale mit Vergleichssignalen eines neuen Aggregats verglichen werden. Die Abweichungen der Signale geben Auskunft über den Zustand von Lagern, Buchsen und Bolzen.

Auch aus der DE 20 2008 010 351 U1 ist eine Vorrichtung zur Lagerdiagnose an Exzenterwellen von Stopfaggregaten bekannt. Zur Überwachung des Lagerzustandes wird je Exzenterwellenantrieb ein Schwingungsaufnehmer am Lagerbock des Antriebes platziert.

Die EP 2 770 108 A1 offenbart ein Stopfaggregat mit einer Steuerung/Regelung zur Ansteuerung und Regelung der Bestellzylinder in Abhängigkeit einer Reaktionskraft, die bei einem Beistellvorgang vom Schotter auf die Stopfwerkzeuge wirkt.

Aus der DE 10 2014 206412 A1 ist ein Prüfstand für eine Weiche bekannt. Dabei wird ein Koppelungspunkt des Prüfstands mit einem Weichenantrieb verbunden, um eine Reaktionskraft auf den Weichenantrieb auszuüben. Eine Prüfvorrichtung zum Bewegen eines antriebslosen Handwagens ist in der US 2003/121333 A1 offenbart. Mit einer aus der GB 2 086 063 A bekannten Prüfvorrichtung ist die statische Traglast eines Metallstehers messbar.

### Zusammenfassung der Erfindung

Der Erfindung liegt die Aufgabe zugrunde, eine Prüfvorrichtung der eingangs genannten Art anzugeben, die eine Bewertung des Gesamtzustands des Stopfaggregats ermöglicht. Des Weiteren ist ein entsprechendes Verfahren darzulegen.

Erfindungsgemäß wird diese Aufgabe gelöst durch eine Prüfvorrichtung gemäß Anspruch 1 und ein Verfahren gemäß Anspruch 9. Vorteilhafte Weiterbildungen der Erfindung ergeben sich aus den abhängigen Ansprüchen.

Dabei umfasst die Prüfvorrichtung zum Festhalten der zwei Stopfpickelarme jeweils eine eigene Festhaltevorrichtung, wobei die zwei Festhaltevorrichtungen zur Ausübung von Gegenkräften auf das Stopfaggregat mit einer zumindest einen Linearantrieb umfassenden linearen Antriebs- und Messeinrichtung zur Aufnahme von Kraft-Weg-Kennlinien verbunden sind. Eine solche Prüfvorrichtung ermöglicht die Güteprüfung eines Stopfaggregats. Sinnvoll ist eine solche Prüfung bei der Entwicklung eines neuen Stopfaggregats, um das Verhalten bei verschiedenen Eisatzbedingungen simulieren zu können. Die Prüfvorrichtung übt dabei auf das Stopfaggregat jene Reaktionskräfte aus, die im operativen Einsatz durch das Schotterbett hervorgerufen werden.

Auch bei bereits im Einsatz befindlichen Stopfaggregaten ist die Anwendung der Prüfvorrichtung sinnvoll, um den Zustand des Aggregats und die erzielbare Stopfgüte bei unterschiedlichen Bedingungen feststellen zu können. Beispielsweise ist mit der Prüfvorrichtung der in ein Schotterbett einbringbare Energiegehalt pro Eintauchvorgang als Kennwert für das Stopfaggregat ermittelbar. Veränderungen bei wiederholten Prüfungen lassen zudem frühzeitig Rückschlüsse auf Verschleißerscheinungen oder Fehlfunktionen zu.

Erfindungsgemäß ist die Antriebs- und Messeinrichtung mit einer intelligenten Steuerung zur Änderung des auf das Stopfaggregat wirkenden Reaktionsverhaltens der Prüfvorrichtung verbunden. Mittels dieser Steuerung lässt sich das auf das Stopfaggregat wirkende Reaktionsverhalten der Prüfvorrichtung verändern. Insbesondere unterschiedliche Schotterbetthärten sind auf diese Weise vorgebbar.

Von Vorteil ist es, wenn ein Anschluss der Prüfvorrichtung an ein Datennetz vorgesehen ist, um Messdaten an eine ferne Auswerteeinrichtung zu übertragen. Das ermöglicht eine zentrale Auswertung von Versuchen während einer Neu- oder Weiterentwicklung des Stopfaggregats oder eine Vergleichsanalyse von zu unterschiedlichen Zeiten erfassten Prüfergebnissen.

Eine einfache Ausprägung der Erfindung sieht vor, dass der zumindest eine Linearantrieb zwischen den beiden Festhaltevorrichtungen angeordnet ist. Mit dieser Anordnung ist es möglich, auf beide Stopfpickelarme dieselben Reaktionskräfte wirken zu lassen.

In einer anderen Ausprägung umfasst die lineare Antriebs- und Messeinrichtung zwei Linearantriebe, wobei jeweils ein Linearantrieb zwischen einer Festhaltevorrichtung und einem Träger angeordnet ist. Auf diese Weise sind die Reaktionskräfte auf jeden Stopfpickelarm separat vorgebbar, sodass unterschiedlichste Einsatzszenarios simuliert werden können.

Vorteilhafterweise ist der jeweilige Linearantrieb als ein Hydraulikzylinder ausgebildet. Hierbei erlauben bereits geringe Baugrößen hohe Reaktionskräfte, die insbesondere zur Simulation verhärteter Schotterbettungen erforderlich sind. In den jeweiligen Hydraulikzylinder ist zur wegabhängigen Ansteuerung ein Wegmesssystem integriert.

Des Weiteren sind an jedem Hydraulikzylinder zwei Hydraulikdrucksensoren angeordnet, mittels derer die vom Stopfaggregat auf die Prüfvorrichtung wirkenden statischen und dynamischen Kräfte messbar sind. Durch die direkte Anordnung am jeweiligen Hydraulikzylinder werden dämpfende Effekte vermieden, die in Anschluss- bzw. Verbindungsleitungen auftreten können. Die mittels Drucksensoren erfassten Messsignale sind einerseits zur Regelung der Prüfvorrichtung und andererseits zur Aufzeichnung der Kraft-Weg-Kennlinien nutzbar.

Alternativ dazu kann es auch vorteilhaft sein, wenn der jeweilige Linearantrieb als ein elektrischer Linearantrieb ausgebildet ist. Damit entfällt die Notwendigkeit eines Hydrauliksystems. Zudem sind elektrische Linearantriebe in der Regel einfacher und reaktionsschneller ansteuerbar als Hydraulikantriebe.

An den jeweiligen elektrischen Linearantrieb ist ein Kraftsensor angeschlossen. Dieser misst laufend die vom Stopfaggregat auf den Linearantrieb wirkenden statischen und dynamischen Kräfte und liefert Messsingle für eine Regelung bzw. zur Aufzeichnung der Kraft-Weg-Kennlinien.

Eine einfache Ausprägung der jeweiligen Festhaltevorrichtung sieht vor, dass diese zum Festhalten eines freien Endes eines Stopfpickels ausgebildet ist. Sie umfasst somit Auflagen für die Stopfpickelenden zur Übertragung der Kräfte in beide Bewegungsrichtungen. Damit können Stopfaggregate ohne weitere Vorbereitungen direkt an einer Stopfmaschine geprüft werden.

Alternativ dazu kann es sinnvoll sein, wenn die jeweilige Festhaltevorrichtung einen Schaft aufweist, der in einer Pickelaufnahme des jeweiligen Stopfpickelarms befestigbar ist. Damit können auch Stopfaggregate ohne montierte Stopfpickel an einer Stopfmaschine oder in einem Prüfstand geprüft werden.

Das erfindungsgemäße Verfahren zum Prüfen eines Stopfaggregats mit zwei gegenüberliegenden, mittels Beistellzylinder zueinander beweglicher und in Schwingung versetzbarer Stopfpickelarmen sieht vor, dass jeder Stopfpickelarm mittels einer Festhaltevorrichtung festgehalten wird, dass mittels einer einen Linearantrieb umfassenden linearen Antriebs- und Messeinrichtung über die Festhaltevorrichtungen auf das in Betrieb befindliche Stopfaggregat einstellbare Gegenkräfte ausgeübt werden und dass eine vom jeweiligen Stopfpickelarm auf die Antriebs- und Messeinrichtung wirkende Kraft und ein vom jeweiligen Stopfpickelarm zurückgelegter Weg gemessen werden. Damit sind in einfacher Weise Kraft-Weg-Kennlinien erstellbar. Diese charakterisieren das geprüfte Stopfaggregat und sind zur Ableitung weiterer Kenngrößen nutzbar.

Erfindungsgemäß werden die Gegenkräfte mittels einer intelligenten Steuerung geregelt. Gleichzeitig mit der Ansteuerung der Prüfvorrichtung erfolgt mittels dieser intelligenten Steuerung die Dokumentation der Messergebnisse.

Eine weitere Verbesserung sieht vor, dass mehrere Messvorgänge mit geänderten Gegenkräften durchgeführt werden, um ein Kennlinienfeld zu ermitteln. Beispielsweise wird über einen vorgegebenen Bestellweg des jeweiligen Stopfpickelarms der Widerstand gegenüber der überlagerten Vibrationsamplitude verändert, um ein Kennlinienfeld zu erhalten, welches das geprüfte Stopfaggregat eindeutig charakterisiert.

Günstigerweise ist vorgesehen, dass Messdaten an eine ferne Auswerteeinrichtung übertragen werden. Das erleichtert eine zentrale Auswertung und Dokumentation der Messergebnisse.

### Kurze Beschreibung der Zeichnungen

Die Erfindung wird nachfolgend in beispielhafter Weise unter Bezugnahme auf die beigefügten Figuren erläutert. Es zeigen in schematischer Darstellung:
- Fig. 1: Prüfvorrichtung mit einem Linearantrieb
- Fig. 2: Prüfvorrichtung mit zwei Linearantrieben

### Beschreibung der Ausführungsformen

In den Figuren ist ein unterer Abschnitt eines zu prüfenden Stopfaggregats 1 dargestellt. In einem Aggregatrahmen 2 sind zwei Stopfpickelarme 3 drehbar gelagert. Eine Bestellbewegung des jeweiligen Stopfpickelarms 3 erfolgt in der Regel durch einen nicht dargestellten Beistellzylinder, der den oberen Schenkel des Stopfpickelarms 3 nach außen bewegt. Überlagert wird diese Bestellbewegung durch eine Vibrationsbewegung, die entweder durch einen eigenen Vibrationsantrieb aufgebracht wird oder vom Beistellzylinder selbst erzeugt wird.

Als Vibrationsantrieb hat sich ein Exzenterantrieb bewährt, bei dem ein rotatorisch angetriebener Exzenter mit einer Schwungmasse verbunden ist. An den Vibrationsantrieb ist der jeweilige Bestellzylinder zur Übertragung der Vibrationsbewegung auf den zugehörigen Stopfpickelarm 3 angeschlossen.

Eine andere Bauart sieht eine Vibrationserzeugung durch Unwuchtmassen vor. Ziel der Vibrationsbewegungen ist eine hohe Verdichtung des Schotters unter einer Schwelle, um eine homogene und stabile Lagerung derselben sicherzustellen.

Jede Bauart eines Stopfaggregats 1 bewirkt charakteristische Funktionsmerkmale, die mittels der vorliegenden Prüfvorrichtung 4 und dem entsprechenden Verfahren erfassbar sind. Beispielsweise ist mit einem Exzenterantrieb eine stabile Vibrationsamplitude erzielbar, wohingegen eine Vibrationserzeugung mittels Hydraulikzylinder für Amplitudeneinbrüche bei erhöhtem Schotterwiderstand anfällig ist.

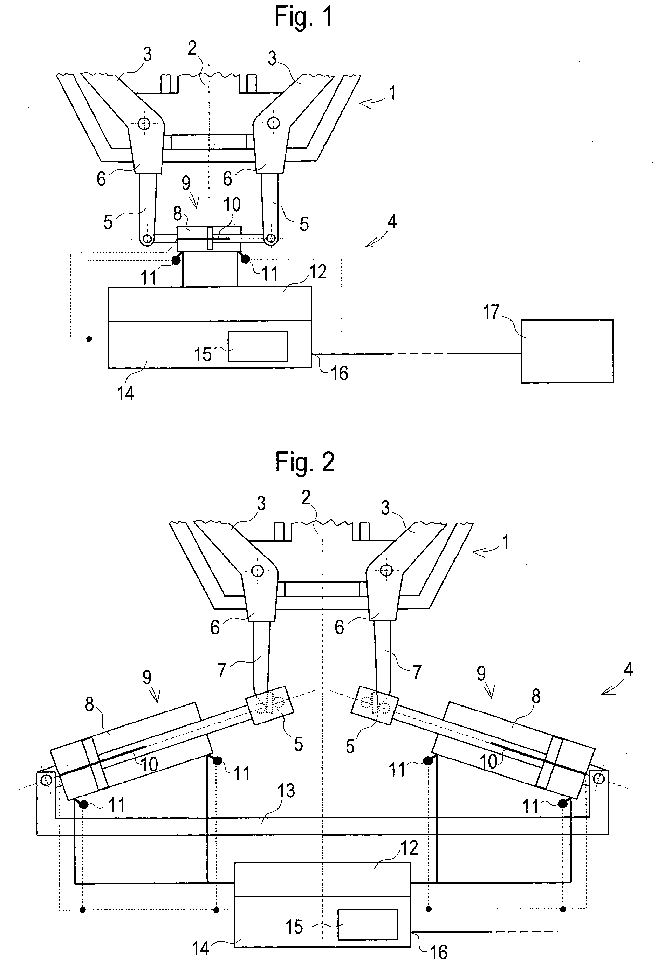

Zu Beginn eines Prüfvorgangs wird die Prüfvorrichtung 4 an das Stopfaggregat 1 angeschlossen. Dazu umfasst die Prüfvorrichtung 4 zwei Festhaltevorrichtungen 5, die beispielsweise - wie in der Fig. 1 dargestellt - direkt in Stopfpickelaufnahmen 6 des Stopfaggregats 1 eingesteckt werden. In Fig. 2 sind die Festhaltevorrichtungen 5 an im Stopfaggregat 1 montierten Stopfpickeln 7 angelegt. Sicherzustellen ist jedenfalls eine spielfreie Übertragung der Bewegungen des jeweiligen Stopfpickelarms 3 auf die zugeordnete Festhaltevorrichtung 5.

In einer einfachen Ausprägung ist ein gemeinsamer Linearantrieb 8 vorgesehen, der die Festhaltevorrichtungen 5 der Prüfvorrichtung 4 als eine lineare Antriebs- und Messeinrichtung 9 miteinander verbindet (Fig. 1). In einem solchen Linearantrieb 8 werden jene Kräfte und Bewegungen aufgenommen, die von beiden Stopfpickelarmen 3 relativ zueinander ausgeübt werden.

Als Linearantrieb 8 ist beispielsweise ein Hydraulikzylinder mit integriertem Wegmesssystem 10 angeordnet. Direkt am Hydraulikzylinder sind zwei Drucksensoren 11 montiert. Zudem umfasst ein Hydrauliksystem 12 Servo- und/oder Proportionalventile für die Ansteuerung des Hydraulikzylinders, eine Schutzbeschaltung, einen Hydrauliktank, eine Hydraulikkühlung, eine Filterung und eine Pumpe.

In einer anderen Ausführungsform umfasst die lineare Antriebs- und Messeinrichtung 9 zwei Linearantriebe 8 (Fig. 2). Diese sind beispielswese als zwei an das Hydrauliksystem 12 angeschlossene Hydraulikzylinder ausgebildet. Jeder Hydraulikzylinder ist mit einem integrierten Wegmesssystem 10 und mit zwei Drucksensoren 11 ausgestattet.

Die derart ausgebildete Antriebs- und Messeinrichtung 9 ist mittels der Festhaltevorrichtungen 5 mit dem Stopfaggregat 1 verbunden. Andererseits ist die Antriebs- und Messeinrichtung 9 gelenkig an ein starres Verbindungselement 13 gekoppelt. Mit dieser Anordnung können jedem Stopfpickelarm 3 unterschiedliche Widerstandskräfte vorgegeben werden, um eine asymmetrische Belastung des Stopfaggregats 1 zu simulieren.

Die Hydraulikzylinder können ohne Dichtung ausgeführt werden, um den hohen Belastungen, die vom Stopfaggregat 1 auf die Prüfvorrichtung 4 einwirken, standzuhalten. Die Hydraulikzylinder können auch mit einer separaten Leckölleitung ausgeführt werden, um die Dichtungen mittels einer gezielten Leckölmenge zu kühlen und das Lecköl aufzusammeln.

Alternativ zu einer hydraulischen Ausführung der linearen Antriebs- und Messeinrichtung 9 kann als Linearantrieb 8 ein elektrischer Linearantrieb, gekoppelt mit einem Kraftsensor sinnvoll sein. Als Kraftsensor ist beispielsweise eine Kraftmessdose einsetzbar.

Ein elektrisches System 14 ist zur elektrischen Versorgung und Ansteuerung der Prüfvorrichtung 4 vorgesehen. Konkret umfasst es eine intelligente Steuerung 15, mittels derer die Ansteuerung der Prüfvorrichtung 4 erfolgt. Die Steuerung 15 empfängt zudem die Messsignale des jeweiligen Drucksensors 11 und des jeweiligen Wegmesssystems 10. Daraus werden Kraft-Weg-Kennlinien ermittelt, welche zur Dokumentation abgespeichert und ausgewertet werden.

Das elektrische System 14 umfasst optional einen Anschluss 16 zur Anbindung an eine ferne Auswerteeinrichtung 17. Damit ist die Möglichkeit geschaffen, Messsignale vor oder nach einer Verarbeitung mittels der Steuerung 15 an die Auswerteeinrichtung 17 zu übertragen. Kraft-Weg-Kennlinien können auf diese Weise zentral ermittelt und abgespeichert werden. Als Auswerteeinrichtung 17 dient beispielsweise ein von der Prüfvorrichtung 4 entfernt angeordneter Computer.

Bei einer Anbindung an einen Server ist es sinnvoll, alle von der Prüfvorrichtung 4 erfassten Daten auf diesen zu übertragen. Dazu umfasst die Steuerung 15 einen geeigneten Netzwerkanschluss. Die Messdaten können auf diese Weise jederzeit für Auswertungen und Bewertungen der durchgeführten Prüfungen herangezogen werden. Zudem besteht die Möglichkeit, Prüfungsparameter im Server abzuspeichern und bei Bedarf auf die Prüfvorrichtung 4 zu übertragen. Auf diese Weise kann am Server für jedes Stopfaggregat 1 ein geeignetes Prüfungsszenario hinterlegt werden.

Vorteilhafterweise umfasst das elektrische System 14 Bedienelemente wie eine Tastatur und einen Monitor, um direkt an der Prüfvorrichtung 4 Daten einzugeben oder abzulesen. Beispielsweise werden Kenndaten des zu prüfenden Stopfaggregats 1 eingegeben und mit aufgenommenen Messdaten verknüpft.

Bei der Durchführung des Verfahrens zum Prüfen des Stopfaggregats 1 ist es sinnvoll, wenn das Prüfprogramm vorher erstellt wird und dann automatisch abläuft. Dabei werden beispielsweise unterschiedliche Beistellwege durchfahren, wobei über den Beistellweg der Widerstand der überlagerten Vibrationsamplitude verändert wird. Auf diese Weise wird ein Kennlinienfeld erzeugt, welches das geprüfte Stopfaggregat 1 eindeutig charakterisiert. Im Anschluss an einen Prüfvorgang erfolgt eine Bewertung des Stopfaggregates 1. Dies erfolgt entweder direkt an der Prüfvorrichtung 4 oder mittels einer entfernten Auswerteeinrichtung 17.

Die Prüfvorrichtung 4 dient auch zur Simulation von Grenzbelastungen des zu prüfenden Stopfaggregats 1. Dadurch können neue Entwicklungen bzw. neue Technologien bereits während der Entwicklungsphase getestet und erprobt werden.

Zudem schafft die Prüfvorrichtung 4 Möglichkeiten, für unterschiedlich aufgebaute Stopfaggregate 1 einheitliche Qualitätskriterien vorzugeben. Dazu wird mittels eines abgespeicherten Prüfprogramms ein standardisierter Prüfungsablauf vorgegeben. Für eine Betriebszulassung müssen beispielsweise Kennwerte, die aus den Messergebnissen abgeleitet werden, innerhalb vorgegebener Bereiche liegen. Anhand der Prüfergebnisse ist somit erkennbar, ob ein geprüftes Stopfaggregat 1 für eine bestimmte Schotterbetthärte geeignet ist.

Dabei können auch Sonderbauformen wie sogenannte Leichtbau-Aggregate mittels eigener Grenzwerte berücksichtigt werden. Leichtbau-Aggregate sind für die Stopfung eines weichen Schotterbetts vorgesehen und sind demnach auch nur für solche Einsätze zu zertifizieren. Dies kann aus Kostengründen durchaus Sinn machen und wird durch ein standardisiertes Prüfverfahren ermöglicht.

Mit den abgespeicherten Messergebnissen und Auswertungen liegt am Ende einer erfolgreichen Prüfung ein nachvollziehbares Qualitätszertifikat vor. Durch die Vorgabe eines Prüfszenarios besteht zudem eine hohe Reproduzierbarkeit und dadurch Vergleichbarkeit der Ergebnisse.

## Patentansprüche

1. Prüfvorrichtung (4) zum Prüfen eines Stopfaggregats (1), das zwei gegenüberliegende, mittels Beistellzylinder zueinander bewegliche, in Schwingung versetzbare Stopfpickelarme (3) umfasst, **dadurch gekennzeichnet, dass** die Prüfvorrichtung (4) zum Festhalten der zwei Stopfpickelarme (3) jeweils eine eigene Festhaltevorrichtung (5) umfasst und dass die zwei Festhaltevorrichtungen (5) zur Ausübung von Gegenkräften auf das Stopfaggregat (1) mit einer zumindest einen Linearantrieb (8) umfassenden linearen Antriebs- und Messeinrichtung (9) zur Aufnahme von Kraft-Weg-Kennlinien verbunden sind und dass die Antriebs- und Messeinrichtung mit einer Steuerung (15) zur Änderung des auf das Stopfaggregat wirkenden Reaktionsverhaltens der Prüfvorrichtung (4) verbunden ist.

2. Prüfvorrichtung (4) nach Anspruch 1, **dadurch gekennzeichnet, dass** ein Anschluss (16) der Prüfvorrichtung (4) an ein Datennetz vorgesehen ist, um Messdaten an eine ferne Auswerteeinrichtung (17) zu übertragen.

3. Prüfvorrichtung (4) nach einem der Ansprüche 1 bis 2, **dadurch gekennzeichnet, dass** der zumindest eine Linearantrieb (8) zwischen den beiden Festhaltevorrichtungen (5) angeordnet ist.

4. Prüfvorrichtung (4) nach einem der Ansprüche 1 bis 3, **dadurch gekennzeichnet, dass** die lineare Antriebs- und Messeinrichtung (9) zwei Linearantriebe (8) umfasst und dass jeweils ein Linearantrieb (8) zwischen einer Festhaltevorrichtung (5) und einem starren Verbindungselement (13) angeordnet ist.

5. Prüfvorrichtung (4) nach Anspruch 3 oder 4, **dadurch gekennzeichnet, dass** der jeweilige Linearantrieb (8) als Hydraulikzylinder ausgebildet ist und an jedem Hydraulikzylinder zwei Hydraulikdrucksensoren (11) angeordnet sind.

6. Prüfvorrichtung (4) nach Anspruch 3 oder 4, **dadurch gekennzeichnet, dass** der jeweilige Linearantrieb (8) als elektrischer Linearantrieb ausgebildet ist, an den ein Kraftsensor angeschlossen ist.

7. Prüfvorrichtung (4) nach einem der Ansprüche 1 bis 6, -7-,- **dadurch gekennzeichnet, dass** die jeweilige Festhaltevorrichtung (5) zum Festhalten eines freien Endes eines Stopfpickels (7) ausgebildet ist.

8. Prüfvorrichtung (4) nach einem der Ansprüche 1 bis 7, **dadurch gekennzeichnet, dass** die jeweilige Festhaltevorrichtung (5) einen Schaft aufweist, der in einer Pickelaufnahme (6) des jeweiligen Stopfpickelarms (3) befestigbar ist.

9. Verfahren zum Prüfen eines Stopfaggregats (1), das zwei gegenüberliegende, mittels Beistellzylinder zueinander bewegliche, in Schwingung versetzbare Stopfpickelarme (3) umfasst, mit einer Prüfvorrichtung nach einem der Ansprüche 1 bis 8, **dadurch gekennzeichnet, dass** jeder Stopfpickelarm (3) mittels einer Festhaltevorrichtung (5) festgehalten wird, dass mittels einer einen Linearantrieb (8) umfassenden linearen Antriebs- und Messeinrichtung (9) über die Festhaltevorrichtungen (5) auf das in Betrieb befindliche Stopfaggregat (1) einstellbare und mittels einer Steuerung (15) geregelte Gegenkräfte ausgeübt werden und dass eine vom jeweiligen Stopfpickelarm (3) auf die Antriebs- und Messeinrichtung (9) wirkende Kraft und ein vom jeweiligen Stopfpickelarm (3) zurückgelegter Weg gemessen werden.

10. Verfahren nach Anspruch 9, **dadurch gekennzeichnet, dass** mehrere Messvorgänge mit geänderten Gegenkräften durchgeführt werden, um ein Kennlinienfeld zu ermitteln.

11. Verfahren nach Anspruch 9 oder 10, **dadurch gekennzeichnet, dass** Messdaten an eine ferne Auswerteeinrichtung (17) übertragen werden.

## Claims

1. A testing device (4) for testing a tamping unit (1) comprising two oppositely positioned vibratable tamping tine arms (3) which are movable towards one another by means of squeezing cylinders, **characterized in that** the testing device (4) comprises a separate clamping device (5) each for clamping the two tamping tine arms (3), and that the two clamping devices (5) are connected to a linear drive- and measuring device (9) comprising at least one linear drive (8) to affect counterforces to the tamping unit (1) and to record force-path curves and that the drive- and measuring device (9) is connected to a control (15) to change the reaction behaviour of the testing device (4) affecting the tamping unit.

2. A testing device (4) according to claim 1, **characterized in that** a connection (16) of the testing device (4) to a data net is provided in order to transmit measuring data to a remote evaluation device (17).

3. A testing device (4) according to one of claims 1 to 2, **characterized in that** the at least one linear drive (8) is arranged between the two clamping devices (5).

4. A testing device (4) according to one of claims 1 to 3, **characterized in that** the linear drive- and measuring device (9) comprises two linear drives (8), and that a respective linear drive (8) is arranged in each case between a clamping device (5) and a rigid connecting element (13).

5. A testing device (4) according to claim 3 or 4, **characterized in that** the linear drive (8) in each case is designed as hydraulic cylinder and that on each hydraulic cylinder two hydraulic pressure sensors (11) are arranged.

6. A testing device (4) according to claim 3 or 4, **characterized in that** the linear drive (8) in each case is designed as an electrical linear drive and that a force sensor is connected to the electrical linear drive.

7. A testing device (4) according to one of claims 1 to 6, **characterized in that** the clamping device (5) in each case is designed for clamping a free end of a tamping tine (7).

8. A testing device (4) according to one of claims 1 to 7, **characterized in that** the clamping device (5) in each case has a shaft which can be fastened in a tine fitting (6) of the respective tamping tine arm (3).

9. A method for testing a tamping unit (1) having two oppositely positioned vibratable tamping tine arms (3) which are movable towards one another by means of squeezing cylinders with a testing device (4) according to one of claims 1 to 8, **characterized in that** each tamping tine arm (3) is clamped by means of a clamping device (5), that by means of a linear drive- and measuring device (9) comprising a linear drive, variable counterforces regulated by means of a control (15) are applied via the clamping devices (5) to the tamping unit (1) in operation, and that a force acting via the respective tamping tine arm (3) on the drive- and measuring device (9) and a path travelled by the respective tamping tine arm (3) are measured.

10. A method according to claim 9, **characterized in that** several measuring operations are carried out with varied counterforces in order to establish a performance map.

11. A method according to claim 9 or 10, **characterized in that** measuring data are transmitted to a remote evaluation device (17).

## Revendications

1. Dispositif de contrôle (4) pour le contrôle d'un module de bourrage (1) qui comprend deux bras de pic de bourrage opposés (3) mobiles l'un par rapport à l'autre au moyen de cylindres d'adjonction, pouvant être mis en oscillation, **caractérisé en ce que** le dispositif de contrôle (4) comprend à chaque fois un propre dispositif de maintien (5) pour le maintien des deux bras de pic de bourrage (3) et que les deux dispositifs de maintien (5) sont connectés à une installation d'entraînement et de mesure linéaire (9) comprenant au moins un entraînement linéaire (8) pour l'enregistrement de courbes caractéristiques de force-course en vue de l'exercice de forces antagonistes sur le module de bourrage (1), et que l'installation d'entraînement et de mesure est connectée à une commande (15) pour la modification du comportement de réaction agissant sur le module de bourrage du dispositif de contrôle (4).

2. Dispositif de contrôle (4) selon la revendication 1, **caractérisé en ce qu'**un raccord (16) du dispositif de contrôle (4) à un réseau de données est prévu pour transmettre des données de mesure à une installation d'évaluation à distance (17).

3. Dispositif de contrôle (4) selon une des revendications 1 à 2, **caractérisé en ce que** l'au moins un entraînement linéaire (8) est disposé entre les deux dispositifs de maintien (5).

4. Dispositif de contrôle (4) selon une des revendications 1 à 3, **caractérisé en ce que** l'installation d'entraînement et de mesure linéaire (9) comprend deux entraînements linéaires (8) et qu'un entraînement linéaire (8) est à chaque fois disposé entre un dispositif de maintien (5) et un élément de connexion fixe (13).

5. Dispositif de contrôle (4) selon la revendication 3 ou 4, **caractérisé en ce que** l'entraînement linéaire respectif (8) est réalisé en tant que cylindre hydraulique et deux capteurs de pression hydraulique (11) sont disposés sur chaque cylindre hydraulique.

6. Dispositif de contrôle (4) selon la revendication 3 ou 4, **caractérisé en ce que** l'entraînement linéaire respectif (8) est réalisé en tant qu'entraînement linéaire électrique auquel un capteur de force est raccordé.

7. Dispositif de contrôle (4) selon une des revendications 1 à 6, **caractérisé en ce que** le dispositif de maintien respectif (5) est réalisé pour le maintien d'une extrémité libre d'un pic de bourrage (7).

8. Dispositif de contrôle (4) selon une des revendications 1 à 7, **caractérisé en ce que** le dispositif de maintien respectif (5) présente un arbre qui peut être fixé dans un logement de pic (6) du bras de pic de bourrage respectif (3).

9. Procédé de contrôle d'un module de bourrage (1) qui comprend deux bras de pic de bourrage opposés (3) mobiles l'un par rapport à l'autre au moyen de cylindres d'adjonction, pouvant être mis en oscillation, avec un dispositif de contrôle selon une des revendications 1 à 8, **caractérisé en ce que** chaque bras de pic de bourrage (3) est maintenu au moyen d'un dispositif de maintien (5), que des forces antagonistes pouvant être réglées par le biais des dispositifs de maintien (5) sur le module de bourrage (1) se trouvant en fonctionnement et régulées au moyen d'une commande (15) sont exercées au moyen d'une installation d'entraînement et de mesure linéaire (9) comprenant un entraînement linéaire (8), et qu'une force agissant sur l'installation d'entraînement et de mesure (9) par le bras de pic de bourrage respectif (3) et une course parcourue par le bras de pic de bourrage respectif (3) sont mesurées.

10. Procédé selon la revendication 9, **caractérisé en ce que** plusieurs processus de mesure sont réalisés avec des forces antagonistes modifiées pour déterminer une série de courbes caractéristiques.

11. Procédé selon la revendication 9 ou 10, **caractérisé en ce que** des données de mesure sont transmises à une installation d'évaluation à distance (17).
